# EUROPEAN PATENT SPECIFICATION

(11) **EP 0 718 816 B1**
(45) Date of publication and mention of the grant of the patent: **06.08.2003**
(21) Application number: 95119944.7
(22) Date of filing: 18.12.1995
(51) Int. Cl.: G09G 3/36

(54) **Image display device**
Bildanzeigegerät
Dispositif d'affichage d'images

(30) Priority: 20.12.1994 JP 31698894; 09.11.1995 JP 29148695
(43) Date of publication of application: 26.06.1996
(73) Proprietor: SEIKO EPSON CORPORATION, Shinjuku-ku, Tokyo 163-0811 (JP)
(72) Inventor: Kobayashi, Mamoru, Suwa-shi, Nagano-ken, 392 (JP); Yamazaki, Yasuji, Suwa-shi, Nagano-ken, 392 (JP); Aoki, Toru, Suwa-shi, Nagano-ken, 392 (JP); Naito, Keijiro, Suwa-shi, Nagano-ken, 392 (JP)
(74) Representative: Hoffmann, Eckart, Dipl.-Ing.

(56) References cited:
- FR-A- 2 681 973
- US-A- 5 170 158
- US-A- 5 406 304

## Description

The invention relates to an image display device, and more particularly to an image display device utilizing a liquid crystal panel.

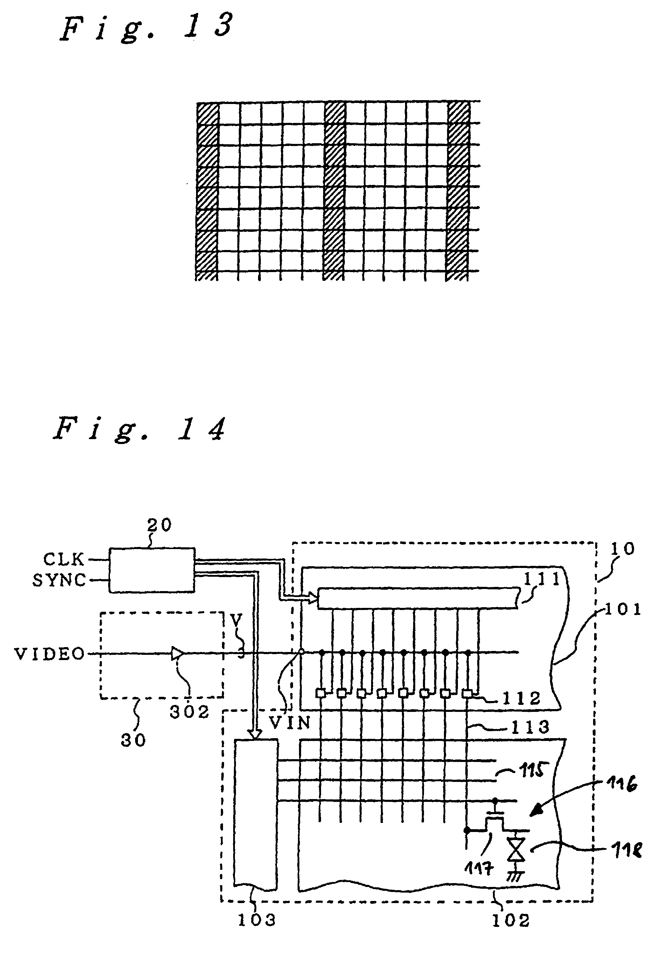

Fig. 14 shows an example of a conventional image display device. This device uses a liquid crystal panel to display images, and is provided with liquid crystal panel block 10, timing circuit block 20, and data-processing circuit block 30. Source clock signal CLK and synchronization signal SYNC are input into timing circuit block 20, and based on these signals, timing circuit block 20 outputs control signals, such as a clock, for operating each circuit block. Liquid crystal panel block 10 is provided with data-side drive circuit 101, active matrix liquid crystal panel 102 (simply referred to as "LC panel" hereinafter), and scanning-side drive circuit 103. Data-side drive circuit 101 is provided with shift register 111 and sampling switches 112. LC panel 102 has a conventional structure with a plurality of data-side electrodes 113 and scanning-side electrodes 115. The crossing points of these electrodes define a matrix of pixels 116. Each pixel comprises a thin film transistor 117 as an active element and two pixel electrodes 118 sandwiching a liquid crystal in between. Data-processing circuit block 30 is equipped with amplification and inversion circuit 302.

An input image signal VIDEO is supplied by an external device, such as an image-processing device (not shown in Fig. 14), to the image display device. This input image signal VIDEO comprises frames of pixel signals one for each pixel of the matrix in every frame. The pixel signals are synchronous with a pixel clock, while each frame defines one vertical synchronization period. The vertical synchronization period is subdivided into horizontal synchronization periods corresponding to the number of rows of the pixel matrix, i.e. the number of scanning electrodes 115. The input image signal VIDEO is amplified by amplification and Inversion circuit 302 of data-processing circuit block 30 into the voltage range required for driving LC panel 102, with its polarity reversed as necessary, and is output as panel drive image signal V to input pin VIN of LC panel block 10.

A pixel clock signal and horizontal and vertical synchronization signals are derived from signal CLK and SYNC. In synchronism with the horizontal synchronization signal shift register 111 periodically outputs sampling signals based on the signal from timing circuit block 20. Based on these sampling signals, sampling switches 112 sequentially sample panel drive image signal V, and output the sampled voltage to a respective one of data-side electrodes 113. Scanning-side drive circuit applies a row select signal sequentially to each scanning-side electrode 115. In this way the individual pixel signals of input image signal VIDEO are successively written into the pixels, pixel by pixel and row by row. Since this way of driving an LC panel is well known, no further explanation will be given.

In an image display device, in which polysilicon thin-film transistors (hereafter referred to as "p-s-i-TFT") are used for the active elements of the LC panel 102, it is possible to also use p-s-i-TFTs to form both data-side drive circuit 101 and scanning-side drive circuit 103 on the same glass substrate as LC panel 102. Formation of these circuits on the same glass substrate enables a size reduction of image display devices compared to the case where the circuits are formed separately. However, the operating speeds of data-side drive circuit 101 and scanning-side drive circuit 103 formed on a glass substrate are slower than the speeds of circuits formed on a silicon substrate and are too slow to process a input image signal having a high frequency pixel clock in the manner outlined above. More particularly, since the time available for sampling a certain pixel signal by a certain sampling switch is equal to the pixel clock period, the shorter this period is the faster must be the response of the sampling switch.

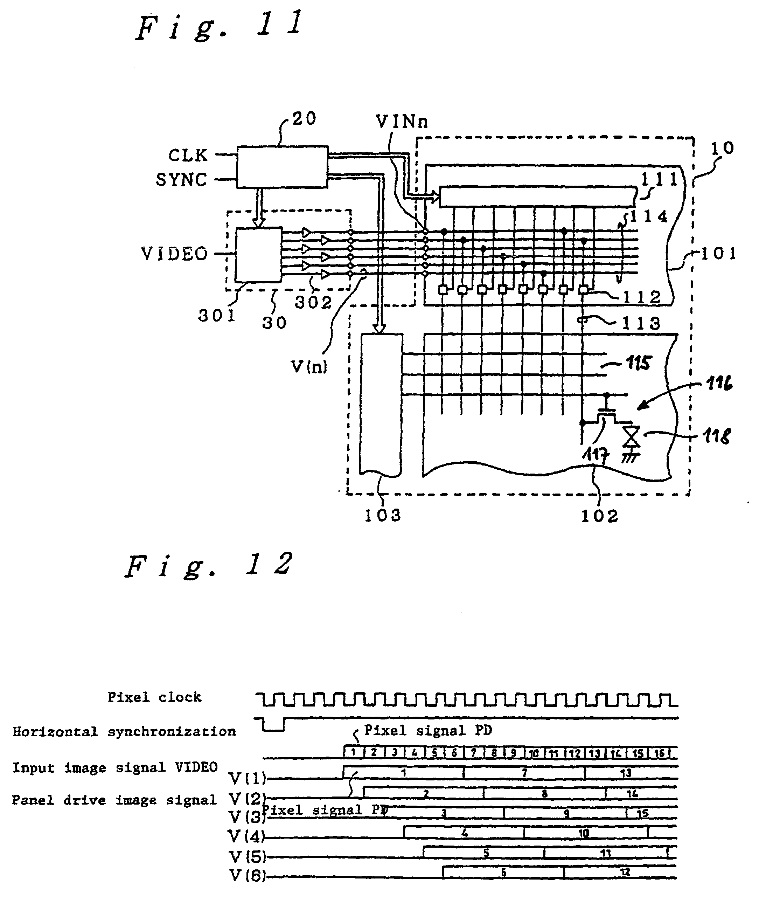

One possible solution is to expand the phase of input image signal VIDEO to achieve high-resolution image display by matching the characteristics of sampling switches 112 and the frequency of Input image signal VIDEO. Fig. 11 shows an example of an image display device in which the single-phase input image signal VIDEO is phase-expanded. In this image display device, data-processing circuit block 30 is provided with phase expansion circuit 301 which expands input image signal VIDEO into six phases. Furthermore, data-processing circuit block 30 is provided with output pins OUT1 - OUT6, and outputs panel drive image signals V(i) (where i = 1 through 6) for individual phases from corresponding pins. These panel drive image signals V(i) comprise the image signals to be supplied to the i-th, (n+i)-th, (2n+i)-th ... pixel in each row (n = 6 in this case). Liquid crystal panel block 10 is provided with six Input pins VIN1 - VIN6 which correspond to panel drive image signals V(i), and each of input pins VIN1 - VIN6 Is connected, via a respective data supply line 114 and sampling switches 112, to every sixth data-side electrode 113. Since the rest of the configuration is basically the same as that of the above-mentioned image display device, the same symbols are used for identical parts and their explanations are omitted.

In data-processing circuit block 30, input image signal VIDEO is expanded into n phases (6 phases in the image display device in this figure) by phase expansion circuit 301; each phase is separately amplified or inverted by a respective amplification and inversion circuit 302, into the voltage range required for driving the LC panel, and is output as panel drive image signal V(i). Consequently, the frequency of each panel drive image signal V(i) becomes lower than that of input image signal VIDEO. As a result, based on the sampling signals output by shift register 111, data-side drive circuit 101 can use sampling switches 112 to accurately sample pixel signals that correspond to individual data-side electrodes 113 out of panel drive image signals V(1) - V(6) supplied to pins VIN1 - VIN6. Therefore, the required potentials can be accurately output to data-side electrodes 113, thus enabling high-resolution image display based on a high-resolution input image signal VIDEO having a high-frequency pixel clock.

Fig. 12 shows further details of phase expansion. More particularly, Fig. 12 is a time chart showing the pixel clock, the horizontal synchronization signal, the input image signal VIDEO and panel drive image signals V(1) to V(6). Input image signal VIDEO contains pixel signals PD supplied as serial data. The individual pixel signals PD are arranged in the order in which the pixels of the LC panel are scanned. "Phase expansion" as the term is used here can be considered as demultiplexing the input image signal into image subsignals (phases), each comprising different ones of the pixel signals of the input image signal, and extending the duration of each pixel signal in the image subsignals by the expansion factor n. Hence, as sown in Fig. 12, the panel drive image signal V(1) includes pixel signals 1, 7, 13 ..., panel drive image signal V(2) includes pixel signals 2, 8, 14, etc. The duration of each pixel signal in each panel drive image signal corresponds to n (n = 6 in this example) pixel clock periods. Phase expansion, thus, results in frequency reduction. As a result, high-frequency input image signals can be sampled even when data-side drive circuit 101 has been formed on a glass substrate, and the on-state resistances of sampling switches 112, which constitute sample holders, are relatively high and their operating speeds relatively slow. This type of phase expansion circuit 301 can be configured using a circuit that latches data from digitized pixel signals for each phase, or a circuit that samples and holds pixel signals of analog image input signals, for each phase.

Panel drive image signals V(i) output by phase expansion circuit 301 contain the pixel signals for every n-th pixel (every 6-th pixel in this example) in a row. Therefore, a signal for every n-th pixel is supplied to each of data input pins VIN1 through VIN6 of data-side drive circuit 101. Each of the n data supply lines 114 connected to these data input pins VIN1 - VIN6 is connected to sampling switches 112, which sample the signal on that data supply line 114 at appropriate timings and output a pixel signal corresponding to the respective data-side electrode 113. As a result, a certain panel drive image signal V(i) controls every n-th pixel in each row of the liquid crystal panel, and the display of a specific pixel is refreshed by the horizontal synchronization signal corresponding to the row of that pixel.

Since the installation of a phase expansion circuit makes it easy to match the operating speed on the sampling side and the frequency of the image signal, a small high-performance image display device can be provided. However, a phase expansion circuit contains separate circuits for individual phases, i.e. there is a separate signal channel for each phase. The variation or change over time in the characteristics of the constituent components in each signal channel, or their assembly conditions, might result in gain difference or offset even If their circuit configurations are identical. Consequently, even if input image signal VIDEO possesses pixel signals of uniform intensity for example, the intensity of the pixel signals for individual phases might be different after the phase expansion. As a result, pixels that should possess the same level of brightness sometimes display different brightness levels on LC panel 102. When a phase expansion circuit is used for n-phase expansion, all the pixels on every n-th data-side electrode are driven via the same signal channel. Thus, any differences between the signal channels that cause level differences in the respective panel drive image signals V(i) result in brightness differences appearing as vertical lines in the displayed image. For example, in the case of Fig. 11 in which a pixel signal is sampled and amplified or reversed for each phase, if the gain of one of the six circuits is smaller than those of the other circuits, the effect of the circuit with the smaller gain will become particularly noticeable when the pixel signals of input image signal VIDEO for one or more entire frames have the same level, in order to achieve uniform brightness over the entire screen of LC panel 102. As a result, every sixth vertical tine will be displayed darker than other lines on LC panel 102, as shown in Fig. 13.

In recent years, image display devices utilizing an LC panel have been used as the display terminal of information processing devices such as computers, TV screens, or in projection devices, and the resolution of these image display devices has been increasing. In view of the expanding use of this type of Image display device a small-size, high-performance image display device not suffering from image quality degradation such as that described above Is highly desirable.

One possible method of avoiding the gain difference or offset caused by component variation is to adjust gain and offset in the manufacturing process. However, because high-precision work is required in matching the optical characteristics of liquid crystals, such adjustment work becomes more difficult as the number of phase expansions increases. Furthermore, the addition of adjusting devices complicates the circuit configuration. One possible solution for avoiding such adjustment work is to use high-precision components. However, this approach increases cost, and it is not easy to completely match their characteristics over the entire circuitry by merely increasing component precision.

FR-A-2 681 973 discloses an image display device according to the pre-characterizing portion of claim 1, in which the column lines of a display matrix are alternately driven by a first and a second serial-to-parallel converter. Both converters are formed of a respective shift register fed with the same serial video signal. While part of the video signal is read into one of the two converters, a previous part read into the other converter during the preceding cycle is used to control respective pixels of the display matrix.

It is an object of this invention to provide an image display device in which each pixel is controlled in response to an image input signal via one of multiple signal channels, wherein differences among the signal channels caused by component variations has no or little perceivable effect on the displayed image.

This objects is achieved with an image display device as claimed in claim 1. Preferred embodiments of the invention are subject-matter of the dependent claims.

The channel selection means provided in accordance with the invention ensures that signals passing through a respective one of n signal channels do not always control the same pixels of the LC panel, yet every pixel being controlled by the pixel signals related to it. By appropriately changing the association between signal channels and pixels, the effect of any differences in gain, offset etc. between the individual signal channels can be distributed over the whole pixel matrix so as to be no longer perceivable. Employing the principle of the invention with the phase expansion explained above enables processing of high resolution high frequency input image signals in a small-size and a high-performance image display device which has the data-side drive circuit formed on the same glass substrate as the LC panel.

While the present invention is particularly useful in the above explained case of phase expansion, it will be appreciated that the same principle can be employed wherever the display states of pixels of an image display device are controlled through respective signal channels which ought to have but actually do not necessarily have the same characteristics.

Embodiments of the invention and effects and advantages achieved by the invention will be explained below with reference to the drawings, in which:
- Fig. 1: is a block diagram showing an embodiment of an image display device according to the invention,
- Fig. 2: is a block diagram showing further details of the data-processing block of the image display device shown in Fig. 1,
- Fig. 3: is a time chart illustrating sequential changes of select signal sets,
- Fig. 4: is a diagram illustrating the effect when signal channels are changed in an order according to Fig. 3,
- Fig. 5: is a time chart illustrating random changes of select signal sets,
- Fig. 6: is a diagram illustrating the effect when signal channels are changed in a random order according to Fig. 5,
- Fig. 7: is a block diagram showing another example of the rotation circuit in the embodiment of Fig. 1,
- Fig. 8: is a time chart illustrating sequential changes of select signal sets in the rotation circuit shown in Fig. 7,
- Fig. 9: is a diagram illustrating the effect when signal channels are changed in accordance with Fig. 8,
- Fig. 10: is a schematic diagram showing a projector type image display device incorporating the invention,
- Fig. 11: is a block diagram of an image display device that includes phase expansion as an example of multiple signal channels,
- Fig. 12: is a time chart illustrating the concept of phase expansion,
- Fig. 13: is a diagram showing how vertically aligned irregularities occur in an image display device that employs phase expansion, and
- Fig. 14: is a circuit block diagram showing a conventional image display device.

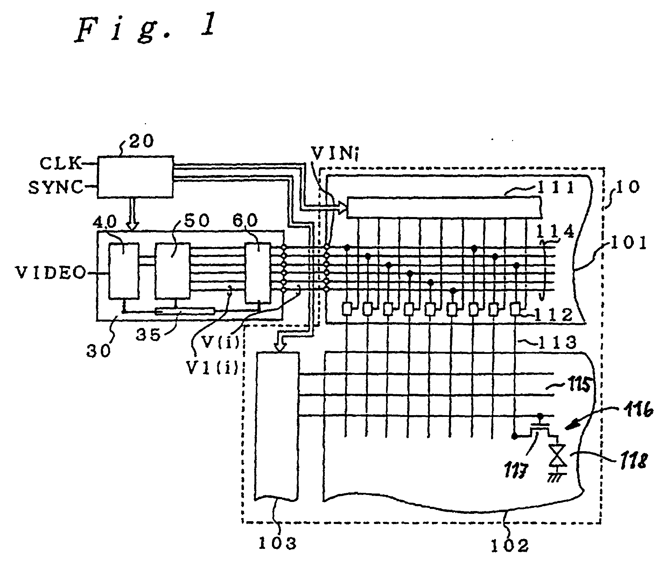

Fig. 1 shows a block diagram of a first embodiment of an image display device according to the invention. Elements in Fig. 1 that are similar to those in the image display device of Fig. 11 are denoted by the same symbols and their explanations are omitted. The image display device of Fig. 1 differs from that of Fig. 11 with respect to the data-processing block 30. Data-processing circuit block 30 of this embodiment of the invention is provided with inversion circuit 40, phase expansion circuit 50, rotation circuit 60, and control circuit 35 which controls these other circuits.

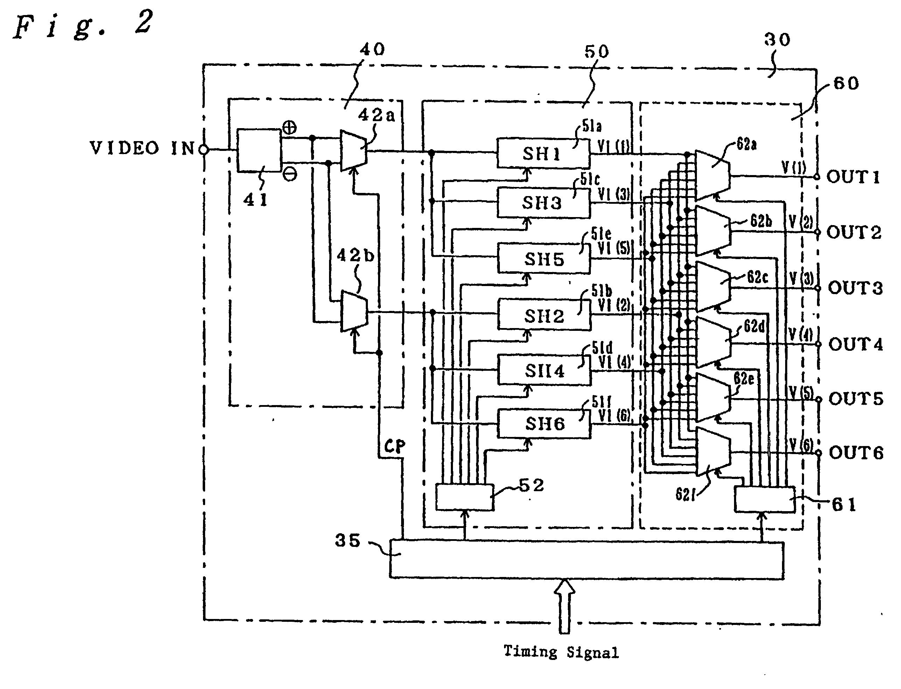

A more detailed configuration of data-processing circuit block 30 is shown in Fig. 2. Inversion circuit 40 is provided with signal output circuit 41 which receives the input image signal applied to terminal VIDEO IN and generates and outputs two image signals VIDEO+ and VIDEO- of opposite polarity, i.e., the normal polarity signal (positive signal) of input image signal VIDEO and the inverted polarity signal (negative signals). Both image signals VIDEO+, VIDEO- are applied to each of two selectors 42a and 42b which select and output either the positive or negative signal. First selector 42a supplies the selected image signal to odd-numbered sample holders 51a, 51c, 51e of phase expansion circuit 50, which are explained below, and second selector 42b supplies the selected signal to even-numbered sample holders 51b, 51d, 51f. Positive and negative signals are Input into first and second selectors 42a and 42b in reverse order, such that first and second selectors 42a and 42b always select signals of opposite polarity. In other words, when the positive image signal VIDEO+ is selected by first selector 42a, the negative image signal VIDEO- is selected by second selector 42b. Consequently, when image signals VIDEO + and VIDEO- are phase-expanded, signals that are opposite in polarity from the signals supplied to even-numbered phases are supplied to odd-numbered phases. If adjacent data-side electrodes are always supplied with signals from opposite ones of odd-numbered and even-numbered phases, cross-talk can be prevented from occurring in the horizontal direction. Note that in the following the term input image signal VIDEO will also be used to commonly refer to the image signals VIDEO + and VIDEO-.

As will be explained in more detail below, in the image display device of the invention, it is possible to change the signal channel through which a certain pixel receives the pixel signal related to it. This is achieved by changing the order in which phase expansion circuit 50 samples input image signal VIDEO (exactly speaking Image signals VIDEO+ and VIDEO-) into the sample holders, and at the same time changing the correspondence between sample holders 51a - 51f and output pins OUT1 - OUT6 to which data supply lines 114 are connected. Changing the correspondence between sample holders 51a - 51f and output pins OUT1 - OUT6 is performed by means of rotation circuit 60 connected between the sample holders and the output pins. If the signal channels are changed, for instance, every horizontal synchronization signal in such a way that positive and negative signals are alternately applied to each data supply line 114, the potentials supplied to each pair of vertically adjacent pixels of LC panel 102 will also be opposite in polarity, thus preventing cross-talk from occurring in the horizontal (row) as well as the vertical (column) direction. Furthermore, based on a control signal CP from control circuit 35, selectors 42a and 42b can change the signals to be supplied to phase expansion circuit 50. Therefore, by inverting the signal to be supplied to phase expansion circuit 50 synchronously with the vertical synchronization signal, for example, the polarity of pixel signals to be applied to individual pixels can be inverted every frame, thus preventing display irregularities, such as cross-talk, from occurring.

To perform dot inversion drive, which inverts the polarities of adjacent dots of such a liquid crystal device, the conventional approach required that the polarity of each pixel signal be inverted individually, a disadvantage in terms of supplying stable pixel signals. However, in the image display device of the invention, the polarities of adjacent pixels in the horizontal direction are changed as explained above, and additionally the signal channels are changed. As a result, the polarities of adjacent pixels in the vertical direction can also be changed. Consequently, it is not necessary to change the polarity of each pixel signal individually, and dot inversion drive can be performed based on pixel signals with stable potentials. Because dot inversion drive produces opposite polarities in the signals that drive two adjacent pixels, the charging/discharging of the hold capacitance of pixel electrodes occurs nearby and the current flowing through the data-side drive electrodes decreases, thus suppressing the variation in the reference potential of the pixel potential hold capacitance. As a result, the occurrence of horizontal cross-talk can be prevented and stable, high-resolution images can be obtained.

Phase expansion circuit 50 in this embodiment is designed to expand input image signal VIDEO into six phases, using six sample holders 51a - 51f. The number of phases is not limited to six, and five or less, or seven or more can be used. When input image signal VIDEO is expanded into six phases, it is possible to connect data supply lines 114 to data-side electrodes 113 by matching the colors in the horizontal direction, in full-color LC panel 102.

Based on sample signals supplied from phase expansion control circuit 52, three sample holders 51a, 51c, 51e sample the image signal VIDEO+ (or VIDEO-) being supplied to them in parallel while three sample holders 51b, 51d, 51f sample the image signal VIDEO- (or VIDEO+) being supplied to them In parallel. The sample holders hold the respective signal sample, i.e. the pixel signal, until the next sample signals are received. Therefore, the pixel signals contained in input image signal VIDEO are expanded into six phases, and the duration (data length) of each pixel signal is extended. Consequently, the frequency of panel drive image signals V(i) (i = 1 - 6) supplied to individual data lines 114 from output pins OUT1 - OUT6 via rotation circuit 60 is reduced compared to the frequency of the input image signal.

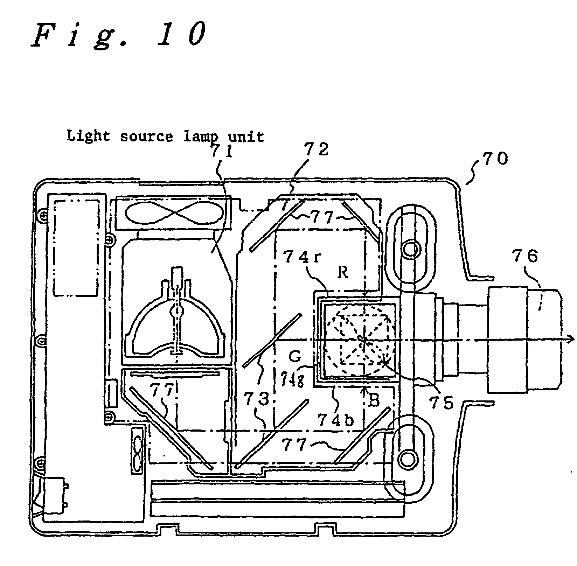

A phase expansion circuit, such as that described above, can be configured using a latch circuit that latches data from digitized pixel signals for each phase, or a circuit that samples and holds analog pixel signals, for each phase. In either case, a separate circuit is required for each phase, e.g., the sample holders 51a - 51f in this embodiment, and thus involves the problem explained above with respect to Figs. 10 and 13.

Rotation circuit 60 in this embodiment is provided with rotation control circuit 61, and six 6-input/1-output analog switches 62a - 62f. More generally, if the expansion factor, i.e. the number of phases is n, n n-input/1-output analog switches will be used. A timing signal is input from timing circuit block 20 to control circuit 61, and control circuit 61 outputs a respective select signal to each of analog switches 62a - 62f, indicating which of its six inputs is to be connected to the single output. Based on these select signals, each analog switch 62a - 62f selects one of image signals V1(i) being held by sample holders 51a - 51f and outputs it to the associated one of output pins OUT1 - OUT6 as panel drive image signal V(i).

Control circuit 61 in this embodiment holds several combinations or sets of select signals each set resulting in another setting of the analog switches 62a - 62f. Control circuit 61 is adapted to select among these sets and to change the selection according to a specified timing. For example, control circuit 61 is provided with six sets S1 - S6 of select signals, and changes between these sets synchronously with the horizontal synchronization signal. The relationship between the select signal sets and input/output connection of the individual analog switches 62a - 62f, in this case, is shown in Table 1. Note that Table 1 indicates the select signal sets S1 to S6 and the sample holders whose output is respectively connected to the individual output pins OUT1 to OUT 6. In addition Table 1 indicates the correspondence between the signals V1(1) to V1(6) output from the sample holders 51a to 51f, respectively, and the signals V(1) to V(6) output from output pins OUT1 to OUT6, respectively.

**Table 1**

| SELECT SIGNAL SET | OUT1 [V(1)] | OUT2 [V(2)] | OUT3 [V(3)] | OUT4 [V(4)] | OUT5 [V(5)] | OUT6 [V(6)] |
|---|---|---|---|---|---|---|
| S1 | 51a [V1(1)] | 51b [V1(2)] | 51c [V1(3)] | 51d [V1(4)] | 51e [V1(5)] | 51f [V1(6)] |
| S2 | 51f [V1(6)] | 51a [V1(1)] | 51b [V1(2)] | 51c [V1(3)] | 51d [V1(4)] | 51e [V1(5)] |
| S3 | 51e [V1(5)] | 51f [V1(6)] | 51a [V1(1)] | 51b [V1(2)] | 51c [V1(3)] | 51d [V1(4)] |
| S4 | 51d [V1(4)] | 51e [V1(5)] | 51f [V1(6)] | 51a [V1(1)] | 51b [V1(2)] | 51c [V1(3)] |
| S5 | 51c [V1(3)] | 51d [V1(4)] | 51e [V1(5)] | 51f [V1(6)] | 51a [V1(1)] | 51b [V1(2)] |
| S6 | 51b [V1(2)] | 51c [V1(3)] | 51d [V1(4)] | 51e [V1(5)] | 51f [V1(6)] | 51a [V1(1)] |

As has been mentioned already, because rotation circuit 60 changes the association between image signals V1(i) held by sample holders 51a - 51f and panel drive image signals V(i) according to select signal sets S1 - S6 as explained above, the order in which sample holders 51a - 51f hold pixel signals of input image signals VIDEO must be changed correspondingly in order to ensure that each data-side electrode 113 receives the pixel signals related to the pixels which are driven by this electrode. Such expansion sequence control is performed by control circuit 52 according to the timing at which select signal sets S1 - S6 are changed and both circuits 52 and 61 are cooperatively controlled by control circuit 35 according to a timing signal.

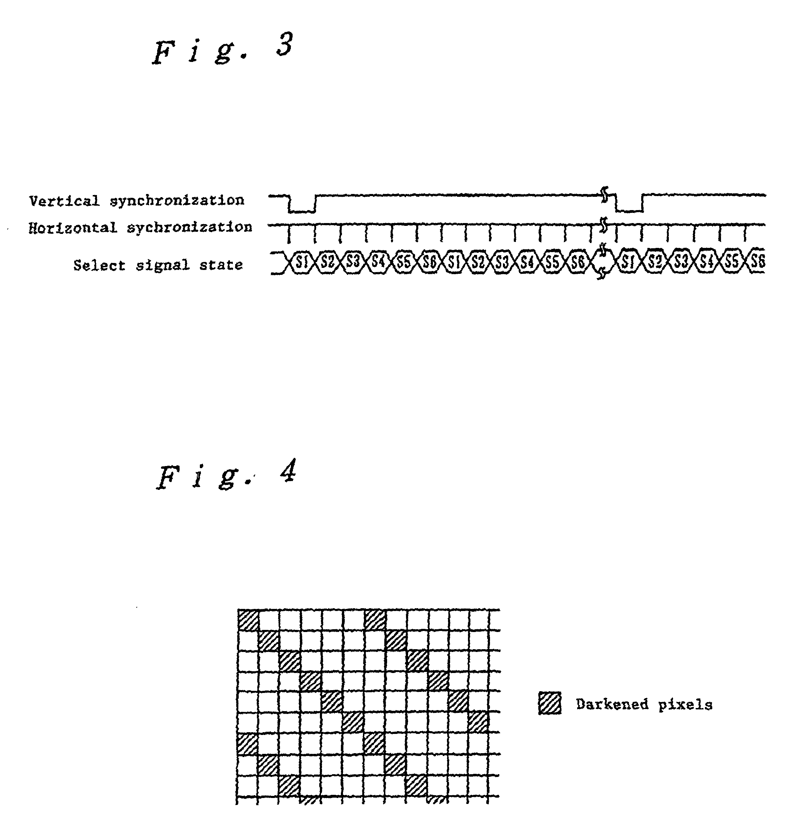

Fig. 3 illustrates the change between the selects signal sets S1 to S6 in relation to the horizontal and vertical synchronization signals. In the example shown in this figure, the select signal set changes from S1 through S6 synchronously with the horizontal and vertical synchronization signals of the image signal. A rotation control circuit 61 that generates select signals in such order can be implemented using a counter circuit, for instance.

Suppose that the gain of one (51a) of six sample holders 51a - 51f is smaller than those of the rest in such an image display device. When the pixel signals of input image signal VIDEO for the entire screen have the same level in order to achieve uniform brightness for the entire screen of the image display device, the pixels to which expanded image signal V1(1) held by sample holder 51a is supplied as panel drive image signal V(i), will be darker than other pixels. However, since the correspondence between image signals V1(i) and panel drive image signals V(i) is changed at regular intervals, the position of the darker pixel is changed among the data-side electrodes 113 correspondingly. Therefore, the pixels possessing different brightness (lower brightness in this example) are dispersed instead of being lined up along a vertical line of LC panel 102.

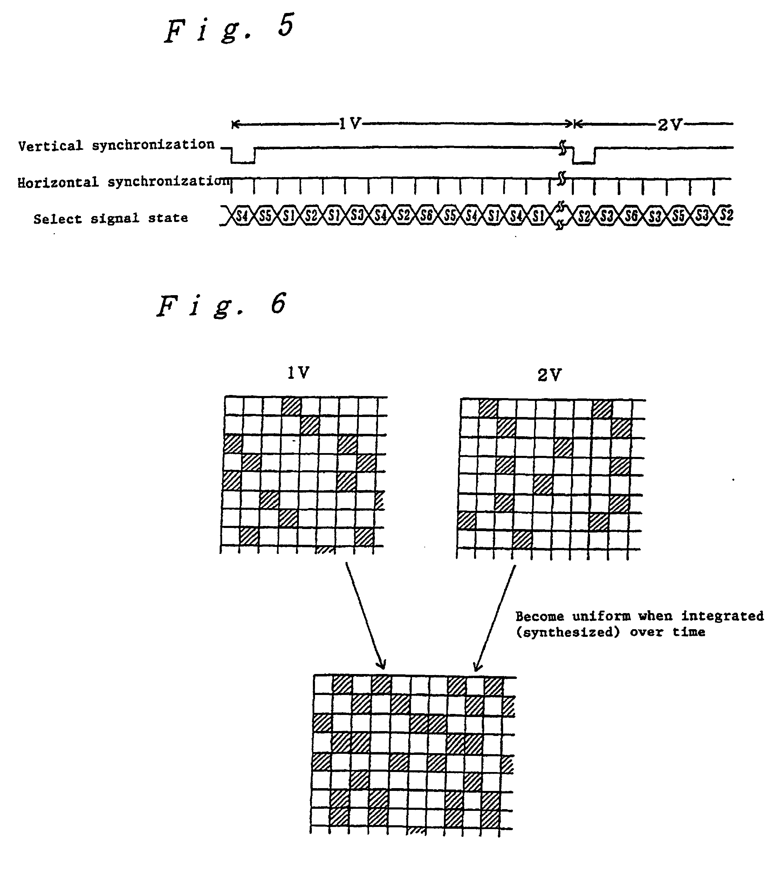

As a result, the effect of any differences among individual sample holders 51 is dispersed over the LC panel. For example, even when the differences among individual sample holders 51 appear as different brightness levels in the LC panel, they will appear as shown in Fig. 4 and are not as noticeable as would be the case had they appeared along vertical lines.

Table 1 and Fig. 3 show a cyclic rotation if the sets of select signals S1 to S6 are chosen in this order. It is to be noted that this is an example only. Generally, the order in which these sets of select signals are changed may either be any predetermined order or a random order. A random change is illustrated in Fig. 5 which is a time chart similar to that of Fig. 3. Rotation control circuit 61 that randomly generates select signal sets in this way can be implemented using a random signal generation circuit. In sample holders 51a - 51f of phase expansion circuit 50, the phase expansion sequence is of course controlled cooperatively with the random change in the select signal.

Again assuming that the gain of one (51a) of the sample holders 51a - 51f is smaller than those of the others, the effect of a random change of signal channels according to Fig. 5, is illustrated in Fig. 6. Because the set of select signals (and, hence, the signal channel) is randomly changed synchronously with the horizontal and vertical synchronization signals as shown in Fig. 5, the pixels with lower brightness levels are not only spatially dispersed over the LC panel in each frame but their positions also change every frame (every vertical synchronization period). Therefore, considering the integrating function of human eyes, the entire LC panel appears to possess nearly the same level of brightness. In other words, the effects of the differences in the characteristics of amplification, inversion, etc. of sample holders for individual phases are canceled both in terms of space and time, improving the image displayed on the LC panel.

It has been explained before that it is desirable to have each pair of pixels adjacent to each other in the horizontal/vertical direction in the pixel matrix driven by voltages of opposite polarities. With respect to the horizontal direction this may be easily ensured by using only appropriate ones of the possible combinations between sample holders and output pins. With respect to the vertical direction, if the select signal sets are changed in a predetermined order it may also be easily achieved. However, if they are changed randomly such opposite polarities may not always be ensured. To avoid this problem it is possible to employ a quasi-random order which ensures that two successively selected sets fulfill the condition of opposite polarities.

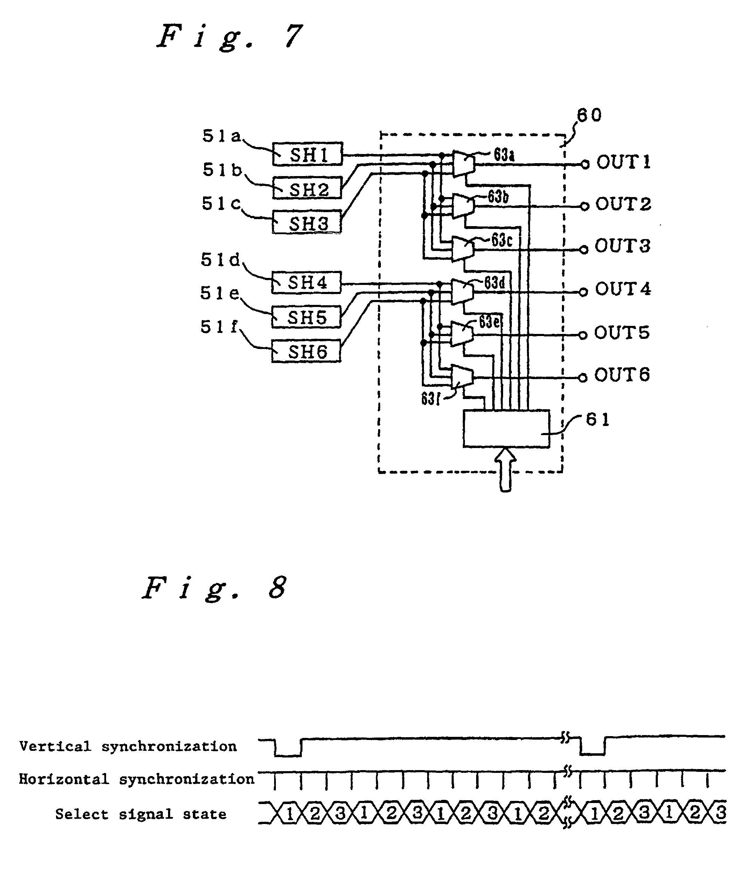

Fig. 7 shows a different example of rotation circuit 60. This rotation circuit 60 uses n m-input/1-output analog switches 63a - 63f (m is an integer smaller than n and is set to 3 in this case) to select among the n image signals V1(i) (n = 6 in this example) from phase expansion circuit 50, and outputs the selected signals as panel drive image signals V(i). In other words, in rotation circuit 60 of this example, analog switches 63a - 63c each select one signal out of phase-expanded image signals V1(1) - V1(3) held by the first through the third sample holders 51a - 51c of phase expansion circuit 50, based on the select signals supplied by rotation control circuit 61, and output the selected signals to output pins OUT1 - OUT3 as panel drive image signals V(1) - V(3). Analog switches 63d - 63f each select one signal out of phase-expanded image signals V1(4) - V1(6) held by the fourth through the sixth sample holders 51d - 51f of phase expansion circuit 50, and output the selected signals to output pins OUT4 - OUT6 as panel drive image signals V(4) - V(6).

Control circuit 61 in this example, like that in the example of Fig. 2, holds multiple combinations or sets of select signals corresponding to different settings of the analog switches. Since each analog switch can select among only m of n image signals V1(i), the number of sets of select signals is m in this case and among these can be changed according to a specified timing. For example, when rotation control circuit 61 is provided with three sets S1 - S3 of select signals and these sets are changed synchronously with the horizontal synchronization signal, the relationship between the select signal sets and the input/output setting of the individual analog switches 63a - 63f may be as shown in Table 2.

**Table 2**

| SELECT SIGNAL SET | OUT1 [V(1)] | OUT2 [V(2)] | OUT3 [V(3)] | OUT4 [V(4)] | OUT5 [V(5)] | OUT6 [V(6)] |
|---|---|---|---|---|---|---|
| S1 | 51a [V1(1)] | 51b [V1(2)] | 51c [V1(3)] | 51d [V1(4)] | 51e [V1(5)] | 51f [V1(6)] |
| S2 | 51c [V1(3)] | 51a [V1(1)] | 51b [V1(2)] | 51f [V1(6)] | 51d [V1(4)] | 51e [V1(5)] |
| S3 | 51b [V1(2)] | 51c [V1(3)] | 51a [V1(1)] | 51e [V1(5)] | 51f [V1(6)] | 51d [V1(4)] |

Fig. 8 illustrates the change between the selects signal sets S1 to S3 in relation to the horizontal and vertical synchronization signals. In this example, select signal sets S1 - S3 change synchronously with the horizontal and vertical synchronization signals. Such a rotation control circuit 61 can be implemented using a counter circuit. Note that while Table 2 and Fig. 8 show a cyclic order of the changing sets of select signals, a different order including a random order may be employed as explained above.

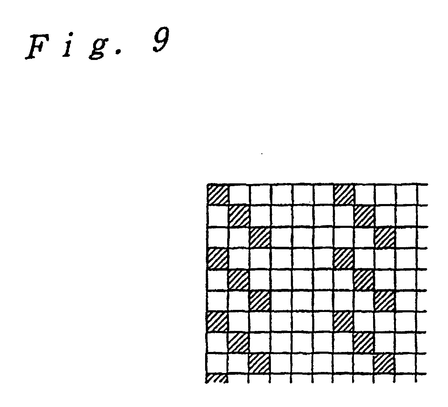

Assume again that the gain related to amplification and inversion of one (51a) of the six sample holders 51a - 51f is smaller than those of the others. The effect when rotation circuit 60 of this example is used and the order of select signal sets according to Table 2 is employed, is as shown in Fig. 9. Pixels with different brightness levels are dispersed over LC panel 102 and thus do not appear as serious visual defects, producing an image with improved quality. As will be appreciated, when the rotation circuit of Fig. 7 is used, phase expansion circuit 50 must change the expansion sequence of input image signal VIDEO in correspondence with the respective sets of select signals such that pixel signals are supplied to specified data-side electrodes in a specified order.

Because the rotation circuit in this example uses 3-input/1-output analog switches, its circuit configuration is simplified, streamlining the design and assembly of rotation circuit 60.

Although the invention was explained based on the embodiments above, the application of the invention is of course not limited to these embodiments. For example, instead of changing the select signal sets completely at random, it is possible to change their sequence relative to the vertical synchronization signal, or to change them randomly relative to the vertical synchronization signal. These changes can disperse, both in terms of space and time, the effect of a difference in circuit characteristics that will appear when a circuit such as a sample hold circuit is used for phase expansion, thus canceling the effects of circuit differences on the screen and producing high-quality, high-resolution images.

Furthermore, the relationship between select signals S1 - S6 or S1 - S3 and the correspondences of phase-expanded image signals V1(i) and panel drive image signals V(i) need not be as described in Tables 1 and 2; and many other types of circuits besides those described above can be used for the circuit for generating and supplying select signals.

In the image display device of the embodiments explained above, differences might occur in the offset between the input and output of the analog switches inside the rotation circuit. However, these differences are generally much smaller than those of the image signal holding circuits or the amplification and inversion circuit in phase expansion circuit 50. Therefore, the provision of a rotation circuit reduces the effect of voltage differences among panel drive image signals V(i), i.e., pixel brightness differences on LC panel 102, instead of increasing them, thus fully producing the image quality improvement effects of rotation. In other words, the term "signal channel" does not necessarily mean the complete signal path from a signal source to a pixel but at least that part of the signal path where differences such as gain and offset may be at a level that would degrade image display if the signal channels were not changed.

Furthermore, the use of a rotation circuit simplifies the dot inversion drive performed by inversion circuit 40, and pixel signals with a stable DC level can be provided because the polarity needs to be inverted only for each vertical synchronization signal, by the inversion circuit for example. Consequently, the signal offset is reduced and horizontal cross-talk can be prevented, producing a clearer image. The invention has been explained above with reference to embodiments using inversion circuit 40. It is to be noted, however, that the effect of distributing display irregularities resulting from differences among the signal channels, in particular those of a phase expansion circuit, over the displayed image to make them not or at least less noticeable, is also achieved if phase inversion circuit 40 is not used. On the other hand, the change of signal channels according to the invention enables the explained easy way for a dot inversion drive. On the other hand, the invention may also be employed only for the purpose of dot inversion drive, i.e. without phase expansion. In such case two signal channels for two opposite polarity signals would be exchanged for each other thereby compensating for any differences in selectors 42a, 42b.

Additionally, the rotation circuit or the entire data processing circuit block including the rotation circuit can be formed on a glass substrate outside of the LC panel, and can be integrated into an IC. In particular, when integrating the circuit into an IC, the use of the rotation circuit of the invention eliminates the level adjustments between signal-processing circuits required during phase expansion. Furthermore, IC integration is easy since high-resolution Images can be achieved even if some level differences exist among sample holder circuits during the integration of these circuits into an IC.

When forming these circuits on a substrate, it is possible to adjust the gain differences and offsets of the circuits during manufacturing processes, in order to avoid the gain differences or offsets that would be caused by component variation. However, because high-precision work is required for matching the gains and offsets with the optical characteristics of liquid crystals, such adjustment work becomes impractical as the number of phase expansions, i.e. the number of separate signal channels, increases. Furthermore, the addition of adjusting devices complicates the circuit configuration. In contrast, the use of a rotation circuit, such as that used in the image display device in this example, eliminates the need for adjustment work and high-precision components, and thus can reduce costs and achieve better display images than possible with higher precision components.

Although the above explanation is based on an image display device that uses an LC panel, an electroluminescent device or a CRT can also be used. Furthermore, the invention is also applicable to projection-type image display devices that use an LC panel as a light valve.

Fig. 10 shows an overview of a projection-type image display device (projector) that uses an optical system based on three prisms. In projector 70 in this example, the light projected from white light source lamp unit 71 is divided into the three light beams of primary colors R, G, and B by multiple mirrors 77 and two dichroic mirrors 73 inside light guide 72. These three color beams are guided to three TFT LC panels 74r, 74g, and 74b each of which modulates one of the three color beams. The light modulated by the three transmission type TFT LC panels 74r, 74g, and 74b is input into dichroic prism 75 from three directions. R and B light beams are bent by 90° by dichroic prism 75 while the G light beam advances straight, and as a result, images of the three colors are synthesized and a color image is projected onto an object, such as a screen, via projection lens 76. When input image signals VIDEO are supplied to each of LC panels 74r, 74g, and 74b via a data-processing circuit block provided with the phase-expansion function and the rotation function in accordance with the invention, images in individual colors with high quality and high resolution and without horizontal cross-talk or vertical line irregularities can be created by LC panels 74r, 74g, and 74b. Therefore, projector 70 can be used to project large crisp images onto an object such as a screen.

## Claims

1. An image display device comprising:
image display means (102) having a matrix of pixels (116),
input means for receiving an input image signal (VIDEO) including a serial stream of pixel signals,
display control means (30) for controlling the display state of each pixel in response to a respective pixel signal (PD) in the input image signal via one of n signal channels (50), wherein n ≥ 2, and
channel selection means (35, 52, 60, 61) for periodically changing the signal channel through which a respective pixel is controlled,
**characterized by**
phase expansion means (50) forming said n signal channels for converting the input image signal into n separate image subsignals (V1(1) - V1(6)), each corresponding to one of said signal channels, such that each of n successive pixel signals (PD) in the input image signal is included in a different one of the Image subsignals and the period of each pixel signal in each image subsignal is n times that of a pixel signal in the input image signal, said phase expansion means being responsive to a first control signal for changing the order in which the pixel signals of each group of n successive pixel signals are distributed to said n image subsignals, and
n supply means (OUT1 - OUT6) for supplying said image subsignals from said signal channels to said image display means (102), and
said channel selection means comprises
rotation means (60) connected between said n signal channels and said n supply means (OUT1 - OUT6) and responsive to a second control signal for selectively changing the association between said n signal channels and said n supply means, and
control means (35, 52, 61) for selectively generating said first and second control signals in any one of multiple predetermined combinations.

2. The device according to claim 1 wherein:
said phase expansion means (59) comprises n sample and hold means (51a - 51f) each for receiving said input image signal and providing a respective one of said image subsignals (V1(1)-V1(6)),
said first control signal comprises first to n-th sample signals for controlling the sample timings of said n sample and hold means the time sequence of said first to n-th sample signals being different in each of said predetermined combinations.

3. The device according to claim 1 or 2 wherein said channel selection means (35, 52, 60, 61) is adapted to select the signal channel (51a - 51f) through which a respective pixel is controlled among said n signal channels.

4. The device according to claim 1 or 2 wherein said signal channels (51a - 51f) are grouped into m groups, m < n, and said channel selection means (35, 52, 60, 61) is adapted to select the signal channel through which a respective pixel is controlled among the m signal channels of a respective group.

5. The device according to claim 3 or 4 wherein said channel selection means (35, 52, 60, 61) is adapted to select the signal channel through which a respective pixel is controlled among said n or m channels in accordance with a predetermined order.

6. The device according to claim 3 or 4 wherein said channel selection means (35, 52, 60, 61) is adapted to select the signal channel through which a respective pixel is controlled among said n or m channels in a random order.

7. The device according to any one the preceding claims of wherein said channel selection means (35, 52, 60, 61) is adapted to change said signal channel in synchronism with every horizontal synchronization of said image display means.

8. The device according to any one the preceding claims of wherein said channel selection means (35, 52, 60, 61) is adapted to change said signal channel in synchronism with every vertical synchronization of said image display means.

9. The device according to claim 2 or any one of claims 3 to 8 as dependent on claim 2, wherein said rotation means (60) comprises n selection means (62a - 62f) each having an output connected to a respective one of said n supply means (OUT1 - OUT6) and plural inputs connected to a group or all of said n sample and hold means (51a - 51f).

10. The device according to any one of the preceding claims wherein said display means (102) is a liquid crystal panel and said supply means (OUT1 - OUT6) is adapted to supply said pixel signals to data-side drive means (101) of said liquid crystal panel.

11. The device according to any one of claims 1 to 10 wherein said Input means (40) comprises polarity inversion means (41) responsive to said input image signal for putting out two image signals polarity inverted with respect to each other, and switching means (42a, 42b) responsive to a control signal (CP) for selectively applying one of said two Image signals to a first or a first group (51a - 51c) and the other one to a second or a second group (51d -51f) of said signal channels.

12. The device of claim 11 wherein said channel selection means (35, 52, 60, 61) is adapted to change said signal channels such that each pair of pixels which are adjacent to each other in the row and/or column direction of said pixel matrix are controlled by different ones of said two image signals.

13. The device according to any one of the preceding claims wherein said display means is a transmission-type liquid crystal panel (74r, 74g, 74b) of a projection-type display device.

## Patentansprüche

1. Bildanzeigegerät, aufweisend:
eine Bildanzeigeeinrichtung (102), die eine Pixelmatrix (116) besitzt,
eine Eingabeeinrichtung zum Empfang eines Eingabebildsignals (VIDEO), einschließlich eines seriellen Stroms von Pixelsignalen,
eine Anzeigesteuereinrichtung (30) zum Steuern des Anzeigezustands jedes Pixels in Abhängigkeit von einem jeweiligen Pixelsignal (PD) im Eingabebildsignal über einen von n Signalkanälen (50), wobei n = 2, und
eine Kanalauswahleinrichtung (35, 52, 60, 61) zum periodischen Ändern des Signalkanals, durch den ein jeweiliges Pixel gesteuert wird,
**gekennzeichnet durch**
eine Phasenerweiterungseinrichtung (50), welche die n Signalkanäle bildet, um das Eingabebildsignal in n getrennte Bilduntersignale (V1(1) - V1(6)) umzuwandeln, die jeweils einem der Signalkanäle entsprechen, so daß jedes von n aufeinanderfolgenden Pixelsignalen (PD) im Eingabebildsignal in ein anderes der Bilduntersignale eingeschlossen wird und die Periode jedes Pixelsignals in jedem Bilduntersignal n-mal der eines Pixelsignals im Eingabebildsignal entspricht, wobei die Phasenerweiterungseinrichtung auf ein erstes Steuersignal anspricht, um die Reihenfolge zu ändern, in der die Pixelsignale jeder Gruppe von n aufeinanderfolgenden Pixelsignalen auf die n Bilduntersignale verteilt werden, und
n Zufuhreinrichtungen (OUT1 - OUT6) zur Zufuhr der Bilduntersignale von den Signalkanälen zu der Bildanzeigeeinrichtung (102) und
**dadurch**, daß die Kanalauswahleinrichtung eine Rotationseinrichtung (60), die zwischen die n Signalkanäle und die n Zufuhreinrichtungen (OUT1 - OUT6) geschaltet ist und auf ein zweites Steuersignal anspricht, um die Zuordnung zwischen den n Signalkanälen und den n Zufuhreinrichtungen wahlweise zu ändern, und eine Steuereinrichtung (35, 52, 61) aufweist, um wahlweise das erste und zweite Steuersignal in irgendeiner von mehreren vorherbestimmten Kombinationen zu erzeugen.

2. Gerät nach Anspruch 1, bei dem die Phasenerweiterungseinrichtung (59) n Abtast- und Halteeinrichtungen (51a - 51f) aufweist, die je das Eingabebildsignal empfangen und ein jeweiliges der Bilduntersignale (V1(1) - V1(6) liefern, wobei das erste Steuersignal erste bis n-te Abtastsignale zum Steuern der Abtastzeiten der n Abtast- und Halteeinrichtungen aufweist, wobei die Zeitfolge der ersten bis n-ten Abtastsignale in jeder der vorherbestimmten Kombinationen unterschiedlich ist.

3. Gerät nach Anspruch 1 oder 2, bei dem die Kanalauswahleinrichtung (35, 52, 60, 61) geeignet ist, unter den n Signalkanälen den Signalkanal (51a - 51f) auszuwählen, durch den ein jeweiliges Pixel gesteuert wird.

4. Gerät nach Anspruch 1 oder 2, bei dem die Signalkanäle (51a - 51f) in m Gruppen, m < n, gruppiert sind und die Kanalauswahleinrichtung (35, 52, 60, 61) geeignet ist, unter den m Signalkanälen einer jeweiligen Gruppe den Signalkanal auszuwählen, durch den ein jeweiliges Pixel gesteuert wird.

5. Gerät nach Anspruch 3 oder 4, bei dem die Kanalauswahleinrichtung (35, 52, 60, 61) geeignet ist, unter den n oder m Kanälen entsprechend einer vorherbestimmten Reihenfolge den Signalkanal auszuwählen, durch den ein jeweiliges Pixel gesteuert wird.

6. Gerät nach Anspruch 3 oder 4, bei dem die Kanalauswahleinrichtung (35, 52, 60, 61) geeignet ist, unter den n oder m Kanälen in einer zufälligen Reihenfolge den Signalkanal auszuwählen, durch den ein jeweiliges Pixel gesteuert wird.

7. Gerät nach einem der vorhergehenden Ansprüche, bei dem die Kanalauswahleinrichtung (35, 52, 60, 61) geeignet ist, den Signalkanal synchron mit jeder horizontalen Synchronisation der Bildanzeigeeinrichtung zu wechseln.

8. Gerät nach einem der vorhergehenden Ansprüche, bei dem die Kanalauswahleinrichtung (35, 52, 60, 61) geeignet ist, den Signalkanal synchron mit jeder vertikalen Synchronisation der Bildanzeigeeinrichtung zu wechseln.

9. Gerät nach Anspruch 2 oder einem der Ansprüche 3 bis 8 unter Rückbeziehung auf Anspruch 2, bei dem die Rotationseinrichtung (60) n Wähleinrichtungen (62a - 62f) aufweist, die je einen Ausgang haben, der mit einer jeweiligen der n Zufuhreinrichtungen (OUT1 - OUT6) verbunden ist, sowie eine Vielzahl von Eingängen, die mit einer Gruppe oder allen der n Abtast- und Halteeinrichtungen (51a - 51f) verbunden sind.

10. Gerät nach einem der vorhergehenden Ansprüche, bei dem die Anzeigeeinrichtung (102) ein Flüssigkristallfeld ist und die Zufuhreinrichtung (OUT1 - OUT6) geeignet ist, die Pixelsignale einer datenseitigen Ansteuereinrichtung (101) des Flüssigkristallfeldes zuzuführen.

11. Gerät nach einem der Ansprüche 1 bis 10, bei dem die Eingabeeinrichtung (40) eine Polaritätsumkehreinrichtung (41), die unter Ansprechen auf das Eingabebildsignal zwei Bildsignale mit im Verhältnis zueinander umgekehrter Polarität abgibt, und eine Schalteinrichtung (42a, 42b) aufweist, die auf ein Steuersignal (CP) anspricht, um eines der beiden Bildsignale wahlweise an einen ersten oder eine erste Gruppe (51a - 51c) und das andere an einen zweiten oder eine zweite Gruppe (51d - 51f) der Signalkanäle anzulegen.

12. Gerät nach Anspruch 11, bei dem die Kanalauswahleinrichtung (35, 52, 60, 61) geeignet ist, die Signalkanäle so zu ändern, daß jedes Paar Pixel, die einander in Richtung der Zeile und/oder Spalte der Pixelmatrix benachbart sind, von unterschiedlichen der beiden Bildsignale gesteuert werden.

13. Gerät nach einem der vorhergehenden Ansprüche, bei dem die Anzeigeeinrichtung ein Flüssigkristallfeld des Transmissionskeitstyps (74r, 74g, 74b) eines Anzeigegeräts des Projektionstyps ist.

## Revendications

1. Dispositif d'affichage d'images comportant :
des moyens (102) d'affichage d'images ayant une matrice de pixels (116),
des moyens d'entrée destinés à recevoir un signal d'image d'entrée (VIDEO) incluant un train en série de signaux de pixels,
des moyens (30) de commande d'affichage destinés à commander l'état d'affichage de chaque pixel en réponse à un signal (PD) de pixel respectif dans le signal d'image d'entrée par l'intermédiaire de l'un de n canaux (50) de signal, n étant supérieur ou égal à 2, et
des moyens (35, 52, 60, 61) de sélection de canal destinés à modifier périodiquement le canal de signal par lequel est commandé un pixel respectif,
**caractérisé par**
des moyens (50) d'expansion de phase formant les n canaux de signal pour convertir le signal d'image d'entrée en n sous-signaux (V1(1) - V1(6)) d'images distincts, chaque sous-signal correspondant à l'un des canaux de signal, de sorte que chaque signal des n signaux (PD) de pixels successifs dans le signal d'image d'entrée est inclus dans un sous-signal différent des sous-signaux d'images et la période de chaque signal de pixel dans chaque sous-signal d'image est n fois celle d'un signal de pixel dans le signal d'image d'entrée, les moyens d'expansion de phase étant sensibles à un premier signal de commande en modifiant l'ordre dans lequel les signaux de pixels de chaque groupe de n signaux de pixels successifs sont répartis dans les n sous-signaux d'images, et
n moyens (OUT1 - OUT6) d'alimentation pour fournir les sous-signaux d'images des canaux de signal aux moyens (102) d'affichage d'images, et
les moyens de sélection de canal comportent
des moyens (60) de rotation reliés entre les n canaux de signal et les n moyens (OUT1 - OUT6) d'alimentation et sensibles à un deuxième signal de commande en modifiant sélectivement l'association entre les n canaux de signal et les n moyens d'alimentation, et
des moyens (35, 52, 61) de commande destinés à produire de manière sélective les premier et deuxième signaux de commande suivant l'une quelconque de multiples combinaisons déterminées à l'avance.

2. Dispositif suivant la revendication 1, dans lequel :
les moyens (59) d'expansion de phase comportent n moyens (51a - 51f) d'échantillonnage et de maintien, chacun pour recevoir le signal d'image d'entrée et fournir un sous-signal respectif des sous-signaux (V1(1) - V1 (6)) d'images,
le premier signal de commande comportant des premier à énième signaux d'échantillonnage pour commander les synchronisations d'échantillonnage des n moyens de retenue et d'échantillonnage, la séquence temporelle des premier à énième signaux d'échantillonnage étant différente dans chacune desdites combinaisons déterminées à l'avance.

3. Dispositif suivant la revendication 1 ou 2, dans lequel les moyens (35, 52, 60, 61) de sélection de canal sont conçus pour sélectionner le canal (51a à 51f) de signal par lequel un pixel respectif est commandé parmi les n canaux de signal.

4. Dispositif suivant la revendication 1 ou 2, dans lequel les canaux (51a - 51f) de signal sont regroupés en m groupes, m étant inférieur à n, et les moyens (35, 52, 60, 61) de sélection de canal sont conçus pour sélectionner le canal de signal par lequel un pixel respectif est commandé parmi les m canaux de signal d'un groupe respectif.

5. Dispositif suivant la revendication 3 ou 4, dans lequel les moyens (35, 52, 60, 61) de sélection de canal sont conçus pour sélectionner le canal de signal par lequel un pixel respectif est commandé parmi les n ou m canaux conformément à un ordre déterminé à l'avance.

6. Dispositif suivant la revendication 3 ou 4, dans lequel les moyens (35, 52, 60, 61) de sélection de canal sont conçus pour sélectionner le canal de signal par lequel un pixel respectif est commandé parmi les n ou m canaux suivant un ordre aléatoire.

7. Dispositif suivant l'une quelconque des revendications précédentes, dans lequel les moyens (35, 52, 60, 61) de sélection de canal sont conçus pour modifier le canal de signal en synchronisation avec chaque synchronisation horizontale des moyens d'affichage d'images.

8. Dispositif suivant l'une quelconque des revendications précédentes, dans lequel les moyens (35, 52, 60, 61) de sélection de canal sont conçus pour modifier le canal de signal en synchronisation avec chaque synchronisation verticale des moyens d'affichage d'images.

9. Dispositif suivant la revendication 2 ou l'une quelconque des revendications 3 à 8 telles que dépendantes de la revendication 2, dans lequel les moyens (60) de rotation comporte n moyens (62a - 62f) de sélection ayant chacun une sortie reliée à l'un respectif des n moyens (OUT1 - OUT6) d'alimentation et plusieurs entrées connectées à un groupe ou à l'ensemble des n moyens (51a - 51f) de retenue et d'échantillonnage.

10. Dispositif suivant l'une quelconque des revendications précédentes, dans lequel les moyens (102) d'affichage sont un panneau à cristaux liquides et les moyens (OUT1 - OUT6) d'alimentation sont conçus pour fournir les signaux de pixels à des moyens (101) d'attaque du côté des données du panneau à cristaux liquides.

11. Dispositif suivant l'une quelconque des revendications 1 à 10, dans lequel les moyens (40) d'entrée comportent des moyens (41) d'inversion de polarité sensibles au signal d'image d'entrée pour sortir deux signaux d'images inversés en polarité l'un par rapport à l'autre, et des moyens (42a, 42b) de commutation sensibles à un signal (CP) de commande pour appliquer de manière sélective l'un des deux signaux d'images à un premier des canaux de signal ou à un premier groupe (51a - 51c) de canaux de signal et l'autre à un deuxième canal de signal ou un à deuxième groupe (51d - 51f) de canaux de signal.

12. Dispositif suivant la revendication 11, dans lequel les moyens (35, 52, 60, 61) de sélection de canal sont conçus pour modifier les canaux de signal, de sorte que chaque paire de pixels adjacente l'une à l'autre dans la rangée et/ou la direction de colonne de la matrice de pixels est commandée par des signaux d'images différents des deux signaux d'images.

13. Dispositif suivant l'une quelconque des revendications précédentes, dans lequel les moyens d'affichage sont un panneau (74r, 74g, 74b) à cristaux liquides de type à transmission d'un dispositif d'affichage de type à projection.
